# EUROPÄISCHE PATENTSCHRIFT

(11) **EP 1 933 113 B1**
(45) Veröffentlichungstag und Bekanntmachung des Hinweises auf die Patenterteilung: **05.11.2014**
(21) Anmeldenummer: 08004593.3
(22) Anmeldetag: 27.12.2005
(51) Int. Cl.: G01C 21/36, G09B 29/10

(54) **Verfahren zum Steuern der Anzeige einer geografischen Karte in einem Fahrzeug und Anzeigevorrichtung hierfür**
Method for controlling the display of a geographical map in a vehicle and display device for this purpose
Procédé de commande de l'affichage d'une carte géographique dans un véhicule et dispositif d'affichage correspondant

(30) Priorität: 29.04.2005 DE 102005020152
(43) Veröffentlichungstag der Anmeldung: 18.06.2008
(62) Teilanmeldung aus: 05848971.7
(73) Patentinhaber: Volkswagen Aktiengesellschaft, 38440 Wolfsburg (DE)
(72) Erfinder: Ebert, Andreas, 38104 Braunschweig (DE); Fliegner, Jens, 29399 Wahrenholz (DE); Wäller, Christoph, 38102 Braunschweig (DE); Bohrer, Lorenz, 10623 Berlin (DE); Wengelnik, Heino, 38442 Wolfsburg (DE); Lilienthal, Jörg, 38518 Gifhorn (DE)
(74) Vertreter: Reitstötter Kinzebach

(56) Entgegenhaltungen:
- EP-A- 0 793 074
- WO-A1-2004/059255
- FR-A- 2 720 533
- JP-A- 2 010 216

## Beschreibung

Die vorliegende Erfindung betrifft ein Verfahren zum Steuern der Anzeige einer geografischen Karte in einem Fahrzeug, bei dem eine Anzeigeeinrichtung so angesteuert wird, dass ein Ausschnitt einer geografischen Karte in einem räumlich nichtlinearen Maßstab angezeigt wird. Ferner betrifft die Erfindung ein Navigationssystem, umfassend eine Anzeigevorrichtung zur Anzeige einer geografischen Karte mit einem Steuergerät und einer mit dem Steuergerät verbundenen Anzeigeeinrichtung zur Anzeige eines Kartenausschnitts, wobei das Steuergerät eine Recheneinheit umfasst, mit welcher der geografischen Karte zugeordnete Daten unter Berücksichtigung eines Maßstabs in Anzeigedaten umsetzbar sind, wobei der Maßstab räumlich nichtlinear ist.

Bei Navigationssystemen in Fahrzeugen oder zur Verwendung in Verbindung mit Fahrzeugen ist es bekannt, die gegenwärtige Geoposition im Umfeld einer geografischen Karte darzustellen. Der Maßstab, der für die Darstellung der geografischen Karte gewählt wird, kann bei einem Navigationssystem beispielsweise von der gefahrenen Geschwindigkeit, von dem Typ der gefahrenen Straße oder von einer Auswahl des Benutzers abhängen.

Aus der DE 197 33 650 A1 ist es bekannt, bei einer Anzeigevorrichtung für ein Navigationssystem sowohl eine Übersichtskarte als auch eine Detailkarte darzustellen.

Verfahren und Vorrichtungen, bei denen ein Ausschnitt einer geografischen Karte in einem räumlich nicht linearen Maßstab angezeigt wird, sind aus der EP 0 793 074 A1, der JP 2010216 A, der FR 2 720 533 A1 und der WO 2004/0591255 A1 bekannt.

Es ist die Aufgabe der vorliegenden Erfindung, ein Verfahren und ein Navigationssystem mit einer Anzeigevorrichtung bereitzustellen, bei denen die Darstellung der geografischen Karte verbessert ist. Insbesondere soll die Kartendarstellung zum einen übersichtlich sein und zum anderen genug Detailinformation in der Umgebung des Benutzers liefern.

Erfingdungsgemäß wird diese Aufgabe durch ein Verfahren mit den Merkmalen des Anspruchs 1, ein Navigationssystem mit den Merkmalen des Anspruchs 17 gelöst. Vorteilhafte Aus- und Weiterbildungen ergeben sich aus den Unteransprüchen.

Bei dem erfindungsgemäßen Verfahren wird ein Ausschnitt einer geografischen Karte in einem räumlich nichtlinearen Maßstab gezeigt. Bei der üblichen Kartendarstellung in einem linearen Maßstab entspricht das Verhältnis der Abstände beliebiger Punkte dem Verhältnis der tatsächlichen Geopositionen, die diesen Punkten zugeordnet sind. Erfindungsgemäß wird bei der Anzeige eines Kartenausschnittes zumindest nicht über die gesamte Anzeige die Karte in einem linearen Maßstab angezeigt. Unter einem räumlich nichtlinearen Maßstab wird hier verstanden, dass nicht für jede Kombination von zwei Strecken auf der angezeigten Karte gilt, dass das Verhältnis der Längen der Strecken dem Verhältnis der tatsächlichen geografischen Strecken entspricht. Zusätzlich ist es möglich, dass die Darstellung auch nicht winkeltreu ist. Es können beispielsweise Verzerrungen zum Horizont hin stattfinden.

Bei dem erfindungsgemäßen Verfahren werden markante Geopositionen, die sich nicht in dem angezeigten Kartenausschnitt befinden, ausgewählt und am Rand des Kartenausschnitts dargestellt. Dabei hängt die Größe, die Transparenz und/oder die Farbe der Darstellung der am Rand des Kartenausschnitts dargestellten Geopositionen von der Entfernung zur aktuellen Geoposition des Nutzers abhängen. Hierdurch kann die Fernorientierung des Nutzers wesentlich verbessert werden.

Der Kartenausschnitt kann beispielsweise in zumindest zwei Bereiche unterteilt werden, wobei die beiden Bereiche in verschiedenen linearen Maßstäben angezeigt werden. Dabei sollte der angezeigte Kartenausschnitt an der Grenze der beiden Bereiche stetig ineinander übergehen. Gibt es bei dem angezeigten Kartenausschnitt eine Vorzugsposition, wie beispielsweise die Geoposition des Nutzers, wird in der Nähe dieser Vorzugsposition ein kleinerer, d.h. detaillierterer, Kartenmaßstab angezeigt als in von der Vorzugsposition entfernten Bereichen. Die Kombination der Bereiche mit den verschiedenen linearen Kartenmaßstäben bietet den Vorteil, dass in der Nähe der Vorzugsposition Details erkannt werden können, aufgrund des gröberen Kartenmaßstabs in entfernten Positionen jedoch auch die Übersicht gewahrt bleibt. Es ist in diesem Fall nicht erforderlich, dass zwei separate Karten mit unterschiedlichen Maßstäben angezeigt werden. Die verschiedenen Maßstäbe sind bei dem erfindungsgemäßen Verfahren in einer Karte integriert. Auch ist es nicht erforderlich, dass der Nutzer durch Veränderung des linearen Maßstabs in die Karte hineinzoomt oder aus dieser herauszoomt, um besser Details in seiner Umgebung zu erkennen oder eine bessere Übersicht in einem gröberen Maßstab zu erlangen.

Gemäß einer bevorzugten Weiterbildung des erfindungsgemäßen Verfahrens erfolgt die Auswahl des Kartenausschnitts durch ein Navigationssystem. In diesem Fall kann die Vorzugsgeoposition die von dem Navigationssystem ermittelte aktuelle Geoposition des Nutzers sein. Ferner kann die Vorzugsgeoposition auch eine über das Navigationssystem ausgewählte Geoposition sein. Es kann sich hierbei beispielsweise um den Zielort einer Routenführung handeln oder ein in dem Navigationssystem gespeichertes Sonderziel.

Bei dem vorstehend beschriebenen Ausführungsbeispiel werden räumliche Maßstäbe angezeigt, bei denen dargestellt wird, wie weit Geopositionen räumlich voneinander entfernt sind.

Gemäß einem anderen Ausführungsbeispiel des erfindungsgemäßen Verfahrens, welches auch mit dem vorstehend beschriebenen Ausführungsbeispiel kombiniert werden kann, wird die voraussichtliche Dauer, um von einer Geoposition zu einer anderen zu gelangen, berechnet und es wird der Kartenausschnitt oder zumindest ein Bereich des Kartenausschnitts in einem zeitlichen Maßstab angezeigt, bei dem die Dauer dargestellt wird, um von einer Geoposition zu einer anderen zu gelangen. Bei der Darstellung eines zeitlichen Maßstabs entspricht das Verhältnis der angezeigten Längen von zwei Strecken dem Verhältnis der voraussichtlichen Zeitintervalle, um von den Anfangspunkten zu den Endpunkten der Strecken zu gelangen.

Die Darstellung von zeitlichen Maßstäben hat den Vorteil, dass eine solche Anzeige der Wahrnehmung des Nutzers in vielen Fällen näher kommt als die Anzeige in einem räumlichen, metrischen Maßstab, bei dem die Entfernung eines Punktes zum Fahrzeug abhängig von der Entfernung in Metern in der Realität ist. Der Nutzer ist nämlich häufig weniger daran interessiert, wie weit ein bestimmter Punkt entfernt ist, als vielmehr wie lange er bis zu einem Punkt braucht. Letztere Information wird für den Nutzer bei einer Darstellung in einem zeitlichen Maßstab besser verdeutlicht. Ein Punkt in der Karte ist dabei um so weiter von der Position des Nutzers oder einer anderen Vorzugsposition entfernt, je länger man braucht, um diesen Punkt zu erreichen.

Gemäß einer bevorzugten Ausgestaltung wird eine Kombination aus räumlichen und zeitlichen Maßstäben angezeigt. Dabei wird ein von der aktuellen Geoposition des Fahrers entfernter Bereich in einem zeitlichen Maßstab dargestellt. Der äußere Bereich des Kartenausschnitts wird somit in einem zeitlichen Maßstab dargestellt.

Gemäß einem weiteren Ausführungsbeispiel des erfindungsgemäßen Verfahrens ändert sich der Maßstab des Kartenausschnitts stetig. Es wird somit ein sog. gleitender Maßstab verwendet. Vorzugsweise wird der Kartenausschnitt oder zumindest ein Bereich des Kartenausschnitts in einem logarithmischen Maßstab angezeigt. Besonders bevorzugt ist die logarithmische Darstellung in den äußeren Randzonen des Kartenausschnitts. Hierdurch werden vorteilhafterweise weiter entfernte und damit unwichtigere Details noch weiter an den Rand der Anzeige geschoben, während für nähere und damit potenziell wichtigere Informationen mehr Platz verbleibt. Schließlich können fließende Übergänge zwischen verschiedenen Maßstäben bei der Anzeige des Kartenausschnittes gewählt werden. Dabei wird zwischen zwei Zonen ein Übergangsbereich festgelegt, in dem sich der Maßstab fließend vom Maßstab der einen Zone zum Maßstab der anderen Zone ändert.

Bei einem weiteren Ausführungsbeispiel des erfindungsgemäßen Verfahrens werden die voraussichtlichen Zeitintervalle berechnet, um von der Geoposition des Nutzers zu anderen in dem Kartenausschnitt dargestellten Geoposition zu gelangen. Die Zeitintervalle werden mehreren Zeitzonen zugeordnet und die Zeitzonen voneinander unterscheidbar in dem Kartenausschnitt dargestellt. Auf diese Weise kann die zeitliche Distanz zwischen zwei Orten sehr einfach und schnell von einem Nutzer erfasst werden. Vorteilhaft an einer solchen Anzeige ist, dass zeitliche Entfernungen in räumlichen Kartenansichten dargestellt werden. Eine etwaige Menünavigation zur Anzeige der zeitlichen Distanz oder zur Angabe von zeitlichen Entfernungen von einem Objekt kann bei dieser Darstellung entfallen. Dabei entsprechen die Zeitzonen einem Präzisionsgrad der menschlichen Auffassung von Zeit im Alltag. Bei der Verwendung in einem Navigationssystem ist die verbleibende Reisedauer zu einem Ziel in der Kartenansicht mit einem Blick sichtbar.

Bei dem Verfahren kann zumindest für einen Teil der in dem Kartenausschnitt dargestellten Geopositionen die voraussichtliche Zeitabweichung von einer Route berechnet werden, die Zeitabweichungen können mehreren Zeitzonen zugeordnet werden und die Zeitzonen können unterscheidbar in dem Kartenausschnitt dargestellt werden. Durch diese Art der Darstellung kann die Dauer von Umwegen von einer vorgegebenen Route durch einen Blick auf die Kartenansicht sichtbar werden. Hierdurch wird die intuitive Entscheidung, von einer vorgegebenen Route abzuweichen, um spontan andere Ziele anzufahren, erleichtert.

Die verschiedenen Zeitzonen werden vorzugsweise farblich codiert dargestellt.

Bei der Anzeigevorrichtung des erfindungsgemäßen Navigationssystems ist der Maßstab räumlich nichtlinear. Mit der Recheneinheit kann der Kartenausschnitt in zumindest zwei Bereiche unterteilbar sein, und für die beiden Bereiche sind Anzeigedaten mit verschiedenen linearen Maßstäben berechenbar. Dabei werden bevorzugt die Anzeigedaten von der Recheneinheit so berechnet, dass der angezeigte Kartenausschnitt an der Grenze der beiden Bereiche stetig ineinander übergeht.

Gemäß einer weiteren Ausgestaltung der Anzeigevorrichtung des erfindungsgemäßen Navigationssystems ändert sich der Maßstab des Kartenausschnitts stetig oder der Kartenausschnitt oder zumindest ein Bereich des Kartenausschnitts wird in einem logarithmischen Maßstab angezeigt.

Das erfindungsgemäße Navigationssystem umfasst die vorstehend beschriebene Anzeigevorrichtung. Mit dem Navigationssystem sind erfindungsgemäß markante Geopositionen außerhalb des darzustellenden Kartenausschnitts bestimmbar. Die Anzeigedaten sind dann von der Recheneinheit so berechenbar, dass diese bestimmten Geopositionen am Rand des Kartenausschnitts dargestellt werden, wobei die Größe, die Transparenz und/oder die Farbe der Darstellung der am Rand des Kartenausschnitts dargestellten Geopositionen von der Entfernung zur aktuellen Geoposition des Nutzers abhängt.

Mit dem Navigationssystem kann ferner die voraussichtliche Dauer, um von einer Geoposition zu einer anderen zu gelangen, berechenbar sein. Die Anzeigedaten sind dann von der Recheneinheit so berechenbar, dass der angezeigte Kartenausschnitt oder zumindest ein Bereich des Kartenausschnitts in einem zeitlichen Maßstab angezeigt wird, bei dem die Dauer dargestellt wird, um von einer Geoposition zu einer anderen zu gelangen.

Ferner können mit dem Navigationssystem die voraussichtlichen Zeitintervalle berechenbar sein, um von der gegenwärtigen Geoposition zu anderen in dem Kartenausschnitt dargestellten Geopositionen zu gelangen. Die Anzeigedaten sind dann von der Recheneinheit so berechenbar, dass die Zeitintervalle mehreren Zeitzonen zugeordnet sind, die voneinander unterscheidbar in dem Kartenausschnitt dargestellt werden. Schließlich kann mit dem Navigationssystem zumindest für einen Teil der in dem Kartenausschnitt dargestellten Geopositionen die voraussichtliche Zeitabweichung von einer Route berechenbar sein. Die Anzeigedaten sind in diesem Fall von der Recheneinheit so berechenbar, dass die Zeitabweichungen mehreren Zeitzonen zugeordnet sind, die voneinander unterscheidbar in dem Kartenausschnitt dargestellt werden.

Die Erfindung wird nun anhand von Ausführungsbeispielen mit Bezug zu den Zeichnungen erläutert.

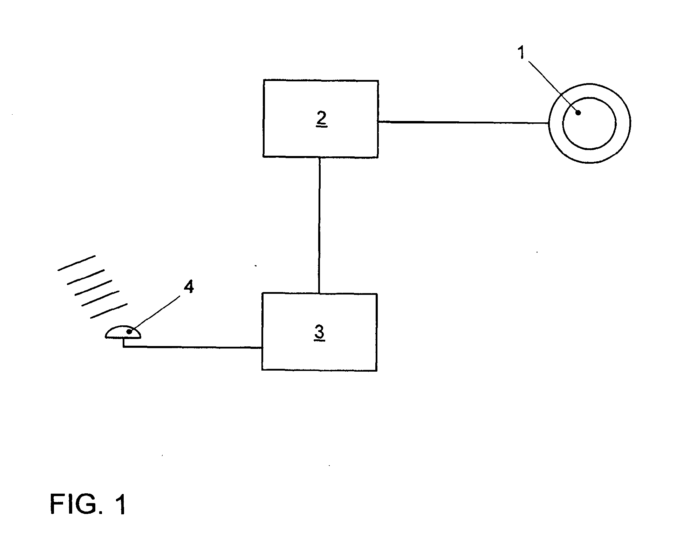

Fig. 1 zeigt ein Ausführungsbeispiel des erfindungsgemäßen Navigationssystems, welches eine Anzeigevorrichtung umfasst,
Fig. 2a zeigt eine herkömmliche Anzeige eines Kartenausschnitts mit linearem räumlichem Maßstab und Fig. 2b zeigt ein Beispiel für die Darstellung des Kartenausschnitts mit zwei angrenzenden Bereichen mit verschiedenen linearen räumlichen Maßstäben,
Fig. 3 zeigt eine Darstellung des Kartenausschnitts mit einem inneren Bereich mit einem linearen Maßstab und einem äußeren Bereich mit einem logarithmischen Maßstab,
Fig. 4 zeigt eine Anzeige entsprechend der Fig. 3 in einem Navigationssystem, bei dem eine Route sowie Sonderziele dargestellt sind,
Fig. 5a zeigt eine herkömmliche Darstellung einer Karte in einem linearen räumlichen Maßstab und Fig. 5b zeigt eine Darstellung gemäß einem Ausführungsbeispiel der Erfindung, bei welcher der innere Bereich in einem linearen Maßstab dargestellt ist und der äußere Bereich in einem zeitlichen Maßstab,
Fig. 6 zeigt eine Darstellung in einem Navigationssystem, bei welcher markante Orte am Horizont dargestellt sind und
Fig. 7 veranschaulicht die Darstellung eines Kartenausschnitts, bei welchem verschiedene Zeitzonen dargestellt sind.

Die Anzeigevorrichtung umfasst eine Anzeigeeinrichtung 1 und ein hiermit verbundenes Steuergerät 2. Die Anzeigeeinrichtung 1 umfasst ein Display, welches im vorliegenden Fall scheibenförmig ist. Andere Formen, wie beispielsweise ein quadratisches, rechteckiges oder ellipsenförmiges Display sind selbstverständlich auch denkbar. Das Display 1 kann eine herkömmliche Flüssigkristallanzeige für zweidimensionale Bilder oder eine andere entsprechende für die Verwendung in einem Kraftfahrzeug geeignete Anzeigeeinrichtung sein. Des Weiteren kann das Display 1 jedoch auch zur autostereoskopischen dreidimensionalen Darstellung von Bildern ausgebildet sein. Um die autostereoskopische Wirkung zu erzielen, kann z.B. vor einer herkömmlichen Flüssigkristallanzeige eine Maske angeordnet sein, welche die Lichtemission des von der Flüssigkristallanzeige abgestrahlten Lichts so verändert, dass autostereoskopische Bilder darstellbar sind. Bei der Maske handelt es sich beispielsweise um eine wellenlängenselektive Filtermaske bzw. eine optische Strukturmaske. Die Maske ermöglicht es, dass man zwischen Teilbildem, die zu verschiedenen Ansichten gehören, unterscheiden kann und jede Ansicht in eine andere Richtung abgestrahlt wird. Es können somit Teilbilder für das rechte und für das linke Auge getrennt werden. Beim Betrachten des Displays 1 können die Teilbilder zu einer dreidimensionalen Ansicht zusammengesetzt werden. Hierfür sind keine weiteren Hilfsmittel, wie Brillen oder dgl., erforderlich. Hinsichtlich weiterer Details des autostereoskopischen Displays 1 wird auf die DE 103 09 194 A1 und die DE 103 20 530 A1 verwiesen.

Die Steuereinheit 2 umfasst eine Recheneinheit, welche zu geografischen Karten gehörige Daten in Anzeigedaten umsetzt, die einer Darstellung in einem räumlich nichtlinearen Maßstab entsprechen. Die Art der Darstellung in dem räumlich nichtlinearen Maßstab wird später im Detail erläutert.

Die Anzeigevorrichtung ist mit einem Navigationssystem 3 verbunden oder ist Teil dieses Navigationssystems. Das Navigationssystem 3 ist mit einem Empfänger 4 für von Satelliten abgestrahlte Positionsdaten verbunden. Es kann sich hierbei um einen GPS-(Global-Positioning-System)-Empfänger handeln. Gleichermaßen könnten auch andere Satellitennavigationssysteme, einschließlich dem zukünftigen System Galileo, verwendet werden. Außerdem ist es möglich, das Navigationssystem 3 und die Steuereinheit 2 mit der Recheneinheit in einem Gerät zusammenzufassen.

Im Folgenden werden die verschiedenen Beispiele der Anzeige auf dem Display der Anzeigeeinrichtung 1 erläutert. Die Daten für diese Anzeige werden von der Recheneinheit berechnet und an die Anzeigeeinrichtung 1 übertragen.

Bei einem ersten Beispiel werden zwei lineare räumliche Maßstäbe miteinander kombiniert. Die Karte wird um eine Vorzugsgeoposition 5 aufgebaut. Dies ist beispielsweise der gegenwärtige Ort der Anzeigevorrichtung, d.h. des Fahrzeugs, in dem diese Anzeigevorrichtung eingebaut ist. Um die Vorzugsgeoposition 5 herum wird ein kleinerer Kartenmaßstab gewählt, bei dem der Abstand der Vorzugsgeoposition 5 bis zur Grenze des Bereichs mit diesem Kartenmaßstab 1 km ist. In einem äußeren Bereich wird ein größerer Maßstab gewählt, so dass der Abstand von der Vorzugsgeoposition 5 zum äußeren Begrenzungsring dieses Bereiches 5 km entspricht, d.h. der Abstand zwischen den Grenzringen 4 km entspricht. Es ist selbstverständlich auch möglich, mehr als zwei lineare Maßstäbe zu verwenden, die sich insbesondere ringförmig um die Vorzugsgeoposition 5 herum erstrecken. Auch ist die Position der Grenzen zwischen den einzelnen Maßstäben variierbar.

An der Grenzlinie zwischen den beiden Bereichen mit verschiedenen linearen Maßstäben geht der Kartenausschnitt stetig ineinander über. Der Maßstab wechselt jedoch unstetig. Aus diesem Grund wird insgesamt ein räumlich nichtlinearer Maßstab angezeigt, obwohl in Teilbereichen lineare Maßstäbe verwendet werden. Die Darstellung unterscheidet sich jedoch von zwei separaten Kartendarstellungen mit unterschiedlichen Maßstäben, da die verschiedenen Maßstäbe in einem Kartenausschnitt integriert sind, bei dem ein stetiger Anschluss bei der Grenzlinie umgesetzt ist.

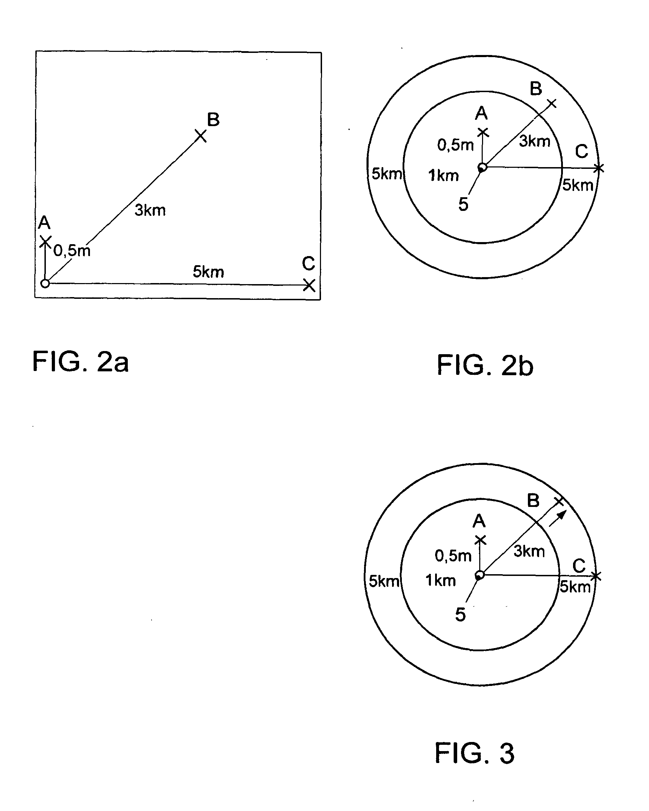

Die Umwandlung einer herkömmlichen Darstellung mit einem räumlich linearen Maßstab in die Darstellung des Ausführungsbeispiels der Erfindung wird anhand der Fig. 2a und 2b erläutert. Fig. 2a zeigt dabei die herkömmliche Darstellung mit einem räumlich linearen Maßstab. Fig. 2b zeigt die Darstellung nach dem erfindungsgemäßen Verfahren bzw. der erfindungsgemäßen Anzeigevorrichtung.

Es wird zunächst als Kartenmittelpunkt eine Vorzugsgeoposition 5 festgelegt. Dies ist im gezeigten Beispiel der Standort des Fahrzeugs. Für jeden Punkt des Kartenausschnitts wird der Winkel und die Entfernung zum Kartenmittelpunkt berechnet. Ist die Entfernung kleiner als die Entfernung zu der ersten Maßstabsgrenze, d.h. in dem gezeigten Beispiel 1 km, so wird der Punkt entsprechend des Maßstabs in diesem Bereich umgerechnet und dargestellt. Die Winkel bleiben dabei - wie auch bei allen anderen Punkten - unverändert. In der Abbildung tritt dieser Fall bei Punkt A mit 500 m Entfernung von der Vorzugsgeoposition 5 ein. Liegt die Entfernung zwischen der ersten und zweiten Maßstabsgrenze, wird die Entfernung zur ersten Maßstabsgrenze abgezogen. Danach kann die Lage des Punktes berechnet werden. Im Beispiel ist der Punkt B 3 km entfernt. Die Differenz zwischen den beiden Maßstabsgrenzen beträgt 4 km. Zieht man von den 3 km die erste Maßstabsgrenze ab, ragt der B 2 km in die Zone mit dem kleineren Maßstab hinein, so dass er im Beispiel des Punktes B genau in der Mitte zwischen den beiden Maßstabsgrenzen dargestellt wird. Ein dritter Punkt C ist 5 km entfernt und wird damit genau auf der zweiten Maßstabsgrenze dargestellt. Besteht die Darstellung aus mehr als zwei Maßstabszonen, wird mit den weiteren entsprechend verfahren.

Der Maßstab der angezeigten Karte ist insgesamt räumlich nicht linear, da das Verhältnis z. B. der Strecke von der Vorzugsgeoposition 5 zum Punkt A zu der Länge der Strecke von der Vorzugsgeoposition 5 zum Punkt B nicht dem Verhältnis der tatsächlichen geografischen Strecken entspricht.

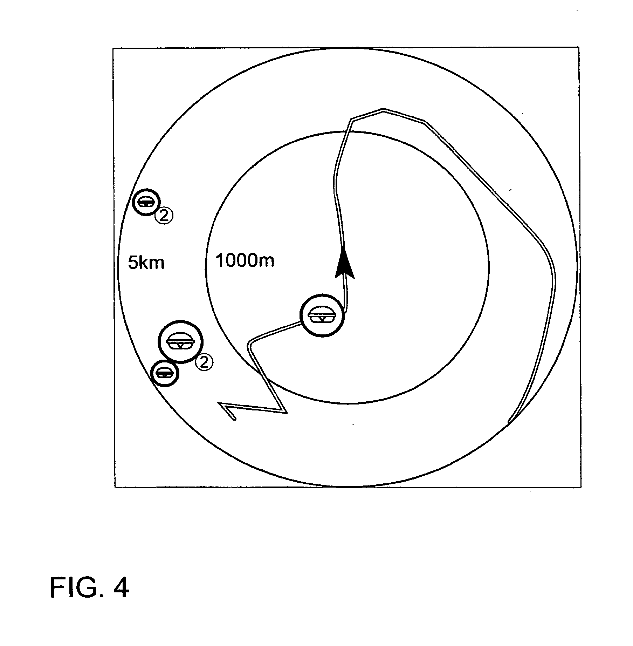

Die Fig. 3 und 4 veranschaulichen entsprechend eine andere Umwandlung der herkömmlichen Kartendarstellung, die in Fig. 2a gezeigt ist. In diesem Fall wird im inneren Bereich, genau wie in Fig. 2b, ein räumlich linearer Maßstab bis zu einer Entfernung von 1 km gewählt. In der Außenzone, die bis zu einem Abstand von 5 km reicht, wird jedoch ein logarithmischer Maßstab gewählt. Der Punkt A bleibt somit unverändert, da er innerhalb des Bereichs mit dem räumlich linearen Maßstab liegt. Auch der Punkt C bleibt unverändert, da er genau auf der äußeren Bereichsgrenze liegt. Der Punkt B wird dagegen näher an den äußeren Rand verschoben. Das Ausmaß der Verschiebung hängt von der Art der gewählten logarithmischen Funktion ab.

In Fig. 4 ist eine Anzeige in einem Navigationssystem gezeigt, welche die in Fig. 3 gezeigten Maßstäbe verwendet. Es ist hierbei einerseits eine Routenführung dargestellt. Andererseits sind verschiedene Sonderziele dargestellt.

Des Weiteren ist es möglich, fließende Übergänge zwischen den Maßstäben zu wählen. In einem Übergangsbereich zwischen zwei Bereichen mit verschiedenen Maßstäben geht der Maßstab fließend von dem einen Maßstab in den anderen Maßstab über.

Gemäß einem zweiten Beispiel wird zumindest in einem Bereich des Kartenausschnitts die Karte in einem zeitlichen Maßstab angezeigt. Der Abstand zweier Punkte in diesem Bereich hängt somit nicht von dem räumlichen Abstand der beiden Geopositionen ab, sondern von der voraussichtlichen Dauer, um von einem Punkt zu einem anderen zu gelangen.

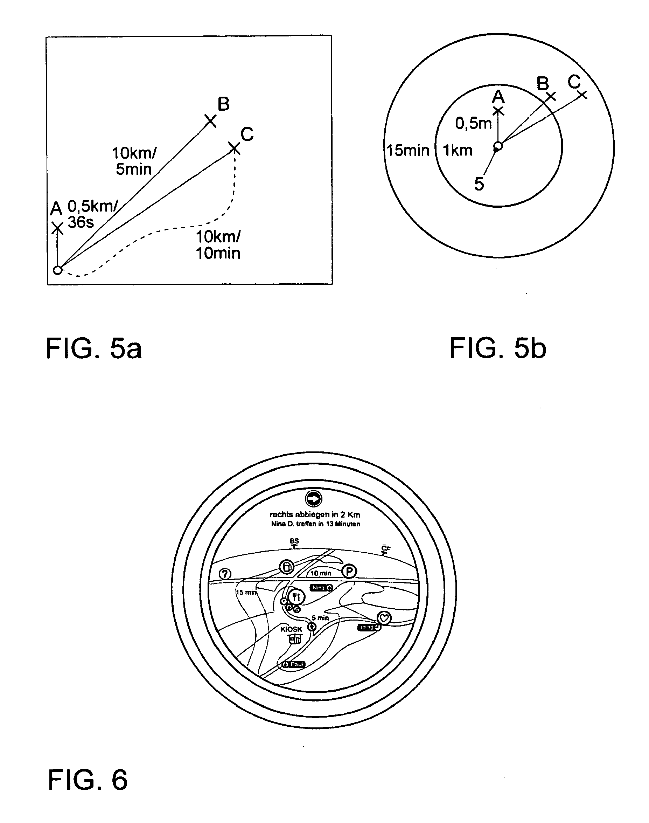

In Fig. 5a ist erneut eine herkömmliche Darstellung in einem linearen räumlichen Maßstab gezeigt. Fig. 5b zeigt die erfindungsgemäße Darstellung, bei der in dem inneren Bereich, wie bei dem vorhergehenden Beispiel ein linearer Maßstab bis zu einer Grenze von 1 km gewählt wurde. In dem Außenbereich wird jedoch ein zeitlicher Maßstab bis zu einer Grenze von einem zeitlichen Abstand von 15 Minuten gewählt. Im Folgenden wird die Umrechnung von der in Fig. 5a gezeigten Darstellung in die Darstellung der Fig. 5b erläutert.

Zunächst wird wiederum als Kartenmittelpunkt die Vorzugsgeoposition 5, d.h. der Standort des Fahrzeugs festgelegt. Für jeden Punkt des Kartenausschnitts wird nun der räumliche Winkel berechnet und die Entfernung zum Kartenmittelpunkt. Ferner wird auf an sich bekannte Weise die Zeit bestimmt, die zum Erreichen dieses Punktes voraussichtlich benötigt wird. Hierbei kann gegebenenfalls auf das Navigationssystem 3 zurückgegriffen werden, welches üblicherweise derartige Berechnungen durchführen kann. Nun wir überprüft, ob der Punkt in dem räumlich linearen Maßstab dargestellt werden kann. Wenn dies der Fall ist, wird der Punkt, wie in dem vorhergehenden Beispiel dargestellt. Im gezeigten Beispiel ist dies bei dem Punkt A der Fall.

Falls der Punkt nicht in den räumlichen Maßstabsbereich passt, wird überprüft, ob der Punkt in den zeitlichen Maßstab passt. Im gezeigten Beispiel ist dies für die Punkte B und C der Fall, da es voraussichtlich weniger als 15 Minuten braucht, um diese Punkte zu erreichen. Nun wird die Position des Punktes in dem Bereich mit zeitlichem Maßstab berechnet. Dazu ist es notwendig der Grenze des Bereichs mit dem räumlich linearen Maßstab eine Zeit zuzuordnen. D.h. im gezeigten Beispiel muss berechnet werden, wie viel Zeit man braucht, um die 1 km-Grenze zu erreichen. Dazu können z.B. Durchschnittsgeschwindigkeiten verwendet werden. In diesem Fall wäre z.B. bei einer Durchschnittsgeschwindigkeit von 60 km/h die 1 km-Grenze 1 Minute entfernt. Ferner kann mit Hilfe des Navigationssystems 3 für eine diese Grenze kreuzende Straße die voraussichtlich erforderliche Zeit berechnet werden, um die Grenze zu erreichen. Hierbei kommt es weniger auf eine absolut exakte als vielmehr auf eine flüssige Darstellung an. Die Punkte sollten beim Überschreiten dieser Grenze weder längere Zeit auf der Grenze verweilen noch plötzlich springen. Die Zeit, die man braucht, um die Position des Punktes zu erreichen, beeinflusst nur die Entfernung des dargestellten Punktes von dem gewählten Kartenmittelpunkt. Der Winkel zum Kartenmittelpunkt wird dabei nicht verändert.

In Fig. 5b ist erkennbar, das, obwohl die Punkte B und C dieselbe Luftlinienentfernung haben, wird der Punkt C in der Karte als deutlich weiter entfernt dargestellt, da er nur über eine kurvige Landstraße (die gestrichelte Linie mit Fig. 5a) bei geringerer Geschwindigkeit zu erreichen ist, wogegen man Punkt B über die Autobahn erreicht.

Es wird darauf hingewiesen, dass die Grenzen zwischen den einzelnen Maßstäben nicht grundsätzlich kreisförmig verlaufen müssen. Es lassen sich auch andere Formen berechnen. Beispielsweise können die Grenzlinien waagerecht verlaufen.

Bei einem weiteren Beispiel wird der Kartenausschnitt zwar in einem räumlichen Maßstab dargestellt, die zeitliche Distanz zwischen zwei Orten wird jedoch über unterscheidbar dargestellte Zeitzonen veranschaulicht. Hierfür werden die voraussichtlichen Zeitintervalle berechnet, um von der Geoposition des Nutzers zu den anderen in dem Kartenausschnitt dargestellten Geopositionen zu gelangen. Diese Zeitintervalle werden mehreren Zeitzonen zugeordnet und die Zeitzonen werden beispielsweise in unterschiedlichen Farben in dem Kartenausschnitt dargestellt. Solche Zeitzonen sind in Fig. 6 gezeigt. Die Zeitzonen werden hier über halbtransparente farbige Flächen oder über Konturen unterschieden. Besonders schnell erreichbare Orte liegen innerhalb der inneren Zone, zeitlich weiter entfernte Orte befinden sich in einer mittleren oder äußeren Zone. Die zeitliche Bedeutung der Farbcodierungen kann durch zusätzlich Beschriftungen (z.B. 5 Minuten, 10 Minuten, etc.) gekennzeichnet werden. Dabei richten sich die Zeitmaßstäbe nach dem räumlichen Maßstab der Karte und nach den Einstellungen des Nutzers. Es können entweder alle Zonen gemeinsam angezeigt werden oder nur einzelne, wie z.B. die 5 Minuten-Zone.

Die Zeitzonen können, wie in Fig. 6 gezeigt, über den gesamten Kartenausschnitt gelegt werden. In diesem Fall werden Flächen erzeugt, die mit einer gewissen Toleranz an Punkten wichtiger Straßen "aufgehängt" sind. Für eine endliche Anzahl von Straßen im Kartenausschnitt wird der Punkt ermittelt, den der Nutzer innerhalb der Zeitspanne der Erreichbarkeitszone (5 Minuten, 10 Minuten, etc.) unter Berücksichtigung fester Standardgeschwindigkeiten erreichen kann. Gegebenenfalls kann hier auch die Berechnung über das Navigationssystem 3 erfolgen. Dies geschieht für möglichst viele Straßen, so dass schließlich eine Menge von Grenzpunkten vorliegt. Diese Grenzpunkte dienen dann als Ankerpunkte einer Umhüllenden, die z.B. die 5 Minuten-Zone definiert. Auf die gleiche Weise werden auch die Grenzpunkte für andere Erreichbarkeitszonen erzeugt.

Je mehr Grenzpunkte ermittelt werden können, desto präziser ist die Form der Zeitzone. Für eine Darstellung mit zentraler Position des Fahrzeugs, wie sie in Fig. 6 gewählt wurde, soll eine Umhüllende an Grenzpunkten aufgehängt sein, die in alle Richtungen möglichst gleichmäßig verteilt ist.

Des Weiteren können die Zeitzonen nur über Infrastrukturelemente sichtbar gemacht werden. In diesem Fall sind lediglich die Straßen und Objekte, nicht aber die gesamte Landschaft entsprechend ihrer Erreichbarkeit in unterschiedlichen Farben eingefärbt. Die Berechnung der Zeitzonen erfolgt wie vorstehend beschrieben.

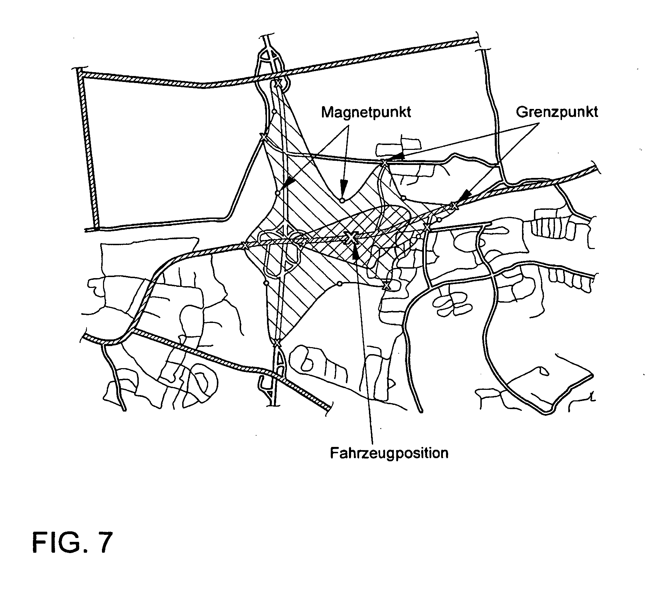

Aufgrund der zu erwartenden Ungenauigkeit durch die Abweichung der realen Fahrgeschwindigkeit und Verkehrssituationen von der Standardgeschwindigkeit soll die Umhüllende nur eine Annäherung sein und keine exakte Darstellung. Die Außenkante der Flächen werden aufgrund der zu erwartenden Unvollständigkeit der Ankerpunkte interpoliert und zu Bezier-Kurven geglättet, so dass Kanten weitgehend reduziert werden. Zwischen zwei Grenzpunkten wird auf halber Strecke entlang der Umhüllenden ein weiterer Punkt eingefügt, der sog. Magnetpunkt. Die Position dieser Punkte wandert so weit in Richtung der Fahrzeugposition, bis sie sich auf eine festgelegte Distanz einer Strecke nähert, die theoretisch zum Erreichen eines der Grenzpunkte führt. Auf diese Weise wird bereits mit einer relativ geringen Anzahl von Grenzpunkten eine Annäherung an die realen Erreichbarkeitsgrenzen möglich. Die schematische Darstellung des Einsatzes von Grenzpunkten und Magnetpunkten ist in Fig. 7 gezeigt.

Gemäß einem weiteren Beispiel wird von dem Navigationssystem eine Route in einem räumlichen Maßstab angezeigt. Ferner wird, zumindest für einen Teil der in dem Kartenausschnitt dargestellten Geopositionen, z.B. für bestimmte Sonderziele, die voraussichtliche Zeitabweichung berechnet, um zu diesen Geopositionen zu gelangen. Die Zeitabweichungen werden auch hier mehreren Zeitzonen zugeordnet und die Zeitzonen werden voneinander unterscheidbar in dem Kartenausschnitt dargestellt. Auch könnten die Sonderziele farbig unterscheidbar dargestellt werden, damit man mit einem Blick erfassen kann, wie groß der zeitliche Umweg ist, um zu diesem Sonderziel zu gelangen.

Gemäß der erfindungsgemäßen Weiterbildung der zuvor beschriebenen Beispiele werden markante Geopositionen, die sich nicht in dem angezeigten Kartenausschnitt befinden, ausgewählt und am Rand des Kartenausschnitts dargestellt. In Fig. 6 ist zu sehen, dass die Abkürzungen BS und CF für zwei Städte, welche außerhalb des gezeigten Kartenausschnitts liegen, am Horizont entsprechend ihrer relativen Lage zur momentanen Fahrtrichtung dargestellt sind. Die Position dieser Fernziele am Horizont passt sich stets der relativen Lage zur Fahrtrichtung an und wandert somit bei eine Änderung der Fahrtrichtung und folglich einer Drehung des Kartenausschnitts am Horizont entlang. Diese Darstellungslösung bietet eine Orientierungsvorschau auf Städte und Objekte, die in Fahrtrichtung liegen, jedoch noch nicht innerhalb des gezeigten Kartenausschnitts sind. Die Fernziele können auch Sonderziele bzw. Points of Interest, der Startpunkt, Zwischenziele oder Endziele sein.

Wie in Fig. 6 gezeigt, werden die Fernziele stets am Schnittpunkt zwischen Darstellungsrand und der Luftlinie zwischen dem Fahrzeug und dem tatsächlichen Ziel angezeigt. Die Auswahl der angezeigten Städte oder Objekte erfolgt nach der Relevanz für die gegebenenfalls eingestellte Route und/oder nach der Distanz zur Nutzerposition. Die Fernziele werden bis zu ihrem Eintritt in den Darstellungsbereich der Karte angezeigt. Je nach Maßstab der Länge der Fahrtstrecke wird ein spezieller Orientierungshorizont festgelegt, der die Maximalentfernung eines Fernziels vom Standort angibt, bei der die Anzeige noch gerechtfertigt ist. So werden z.B. bei einem Darstellungsdurchmesser von 5 km nur Fernziele angezeigt, die nicht weiter als 25 km entfernt sind. Diese maximale Entfernung wächst proportional zum Darstellungsdurchmesser.

Außerdem kann die Entfernung des Fernziels vom aktuellen Standort in der Darstellung vermittelt werden. Dies geschieht durch die Skalierung der Größe eines dem Fernziel zugeordneten Icons. Je weiter das Fernziel entfernt ist, desto kleiner ist das Icon. Ferner kann die Vermittlung durch eine Veränderung der Transparenz erfolgen. Je weiter das Fernziel entfernt ist, desto transparenter bzw. desto ähnlicher der Hintergrundfarbe wird es dargestellt. Schließlich kann die Entfernung durch eine spezielle Farbcodierung vermittelt werde. Bestimmte Farben bedeuten Nähe, andere Farben bedeuten große Entfernung. Außerdem kann die Entfernung in Kilometern konkret als Schriftelement am Icon angegeben werden.

Die Darstellung ist außerdem nicht nur auf die Darstellung mit einem Horizont beschränkt. Vielmehr kann sie auch auf beliebige andere Kartendarstellungen übertragen werden, indem entlang der Ränder die Fernziele bis zu ihrem Erscheinen auf der Darstellungsfläche bereits sichtbar sind und gewissermaßen auf den Eintritt in den Bildausschnitt warten. Durch die Anzeige von Fernzielen wird eine weiträumigere Orientierung möglich, welche über den angezeigten Kartenausschnitt hinausgeht.

### BEZUGSZEICHENLISTE

- 1: Anzeigeeinrichtung
- 2: Steuergerät
- 3: Navigationssystem
- 4: Empfänger für Satellitensignale
- 5: Vorzugsgeoposition

## Patentansprüche

1. Verfahren zum Steuern der Anzeige einer geografischen Karte in einem Fahrzeug, bei dem eine Anzeigeeinrichtung (1) so angesteuert wird, dass ein Ausschnitt einer geografischen Karte in einem räumlich nichtlinearen Maßstab angezeigt wird,
**dadurch gekennzeichnet,**
**dass** markante Geopositionen, die sich nicht in dem angezeigten Kartenausschnitt befinden, ausgewählt werden und am Rand des Kartenausschnitts dargestellt werden und
**dass** die Größe, die Transparenz und/oder die Farbe der Darstellung der am Rand des Kartenausschnitts dargestellten Geopositionen von der Entfernung zur aktuellen Geoposition des Nutzers abhängt.

2. Verfahren nach Anspruch 1,
**dadurch gekennzeichnet,**
**dass** der Kartenausschnitt in zumindest zwei Bereiche unterteilt wird und die beiden Bereiche in verschiedenen linearen Maßstäben angezeigt werden.

3. Verfahren nach Anspruch 2,
**dadurch gekennzeichnet,**
**dass** der angezeigte Kartenausschnitt an der Grenze der beiden Bereiche stetig ineinander übergeht.

4. Verfahren nach einem der vorstehenden Ansprüche,
**dadurch gekennzeichnet,**
**dass** eine Vorzugsgeoposition (5) ausgewählt wird und dass in der Nähe dieser Vorzugsgeoposition ein kleinerer Kartenmaßstab angezeigt wird als in von der Vorzugsgeoposition (5) entfernten Bereichen.

5. Verfahren nach einem der vorstehenden Ansprüche,
**dadurch gekennzeichnet,**
**dass** die Auswahl des Kartenausschnitts über ein Navigationssystem (3) erfolgt.

6. Verfahren nach Anspruch 5,
**dadurch gekennzeichnet,**
**dass** die Vorzugsgeoposition (5) die von dem Navigationssystem (3) ermittelte aktuelle Geoposition des Nutzers ist.

7. Verfahren nach Anspruch 5,
**dadurch gekennzeichnet,**
**dass** die Vorzugsgeoposition (5) eine über das Navigationssystem (3) ausgewählte Geoposition ist.

8. Verfahren nach einem der vorstehenden Ansprüche,
**dadurch gekennzeichnet,**
**dass** räumliche Maßstäbe angezeigt werden, bei denen dargestellt wird, wie weit Geopositionen räumlich voneinander entfernt sind.

9. Verfahren nach einem der vorstehenden Ansprüche,
**dadurch gekennzeichnet,**
**dass** die voraussichtliche Dauer, um von einer Geoposition zu einer anderen zu gelangen, berechnet wird, und dass der Kartenausschnitt oder zumindest ein Bereich des Kartenausschnitts in einem zeitlichen Maßstab angezeigt wird, bei dem die Dauer dargestellt wird, um von einer Geoposition zu einer anderen zu gelangen.

10. Verfahren nach Anspruch 9,
**dadurch gekennzeichnet,**
**dass** eine Kombination aus räumlichen und zeitlichen Maßstäben angezeigt wird.

11. Verfahren nach Anspruch 9 oder 10,
**dadurch gekennzeichnet,**
**dass** ein von der aktuellen Geoposition des Fahrers entfernter Bereich in einem zeitlichen Maßstab dargestellt wird.

12. Verfahren nach einem der vorstehenden Ansprüche,
**dadurch gekennzeichnet,**
**dass** die Grenzlinie zwischen zwei Breichen mit Darstellungen in verschiedenen Maßstäben kreisförmig ist.

13. Verfahren nach Anspruch 1,
**dadurch gekennzeichnet,**
**dass** sich der Maßstab des Kartenausschnitts stetig ändert.

14. Verfahren nach einem der vorstehenden Ansprüche,
**dadurch gekennzeichnet,**
**dass** der Kartenausschnitt oder zumindest ein Bereich des Kartenausschnitts in einem logarithmischen Maßstab angezeigt wird.

15. Verfahren nach einem der vorstehenden Ansprüche,
**dadurch gekennzeichnet,**
**dass** die voraussichtlichen Zeitintervalle berechnet werden, um von der Geoposition des Nutzers zu anderen in dem Kartenausschnitt dargestellten Geopositionen zu gelangen, die Zeitintervalle mehreren Zeitzonen zugeordnet werden und die Zeitzonen voneinander unterscheidbar in dem Kartenausschnitt dargestellt werden.

16. Verfahren nach Anspruch 15,
**dadurch gekennzeichnet,**
**dass** die Zeitzonen farblich codiert werden

17. Navigationssystem (3), umfassend eine Anzeigevorrichtung zur Anzeige einer geografischen Karte mit einem Steuergerät (2) und einer mit dem Steuergerät (2) verbundenen Anzeigeeinrichtung (1) zur Anzeige eines Kartenausschnitts, wobei das Steuergerät (2) eine Recheneinheit umfasst, mit welcher der geografischen Karte zugeordnete Daten unter Berücksichtigung eines Maßstabs in Anzeigedaten umsetzbar sind, wobei der Maßstab räumlich nichtlinear ist,
**dadurch gekennzeichnet,**
**dass** mit dem Navigationssystem (3) markante Geopositionen außerhalb des darzustellenden Kartenausschnitts bestimmbar sind und dass die Anzeigedaten von der Recheneinheit so berechenbar sind, dass diese bestimmten Geopositionen am Rand des Kartenausschnitts dargestellt werden wobei die Größe, die Transparenz und/oder die Farbe der Darstellung der am Rand des Kartenausschnitts dargestellten Geopositionen von der Entfernung zur aktuellen Geoposition des Nutzers abhängt.

18. Navigationssystem (3) nach Anspruch 17,
**dadurch gekennzeichnet,**
**dass** mit der Recheneinheit der Kartenausschnitt in zumindest zwei Bereiche unterteilbar ist und für die beiden Bereiche Anzeigedaten mit verschiedenen linearen Maßstäben berechenbar sind.

19. Navigationssystem (3) nach Anspruch 17 oder 18,
**dadurch gekennzeichnet,**
**dass** die Anzeigedaten von der Recheneinheit so berechenbar sind, dass der angezeigte Kartenausschnitt an der Grenze der beiden Bereiche stetig ineinander übergeht.

20. Navigationssystem (3) nach Anspruch 17,
**dadurch gekennzeichnet,**
**dass** sich der Maßstab des Kartenausschnitts stetig ändert.

21. Navigationssystem (3) nach einem der Ansprüche 17 bis 20,
**dadurch gekennzeichnet,**
**dass** der Kartenausschnitt oder zumindest ein Bereich des Kartenausschnitts in einem logarithmischen Maßstab angezeigt wird.

22. Navigationssystem (3) nach einem der Ansprüche 17 bis 21,
**dadurch gekennzeichnet,**
**dass** mit dem Navigationssystem (3) die voraussichtliche Dauer, um von einer Geoposition zu einer anderen zu gelangen, berechenbar ist und dass die Anzeigedaten von der Recheneinheit so berechenbar sind, das der angezeigte Kartenausschnitt oder zumindest ein Bereich des Kartenausschnitts in einem zeitlichen Maßstab angezeigt wird, bei dem die Dauer dargestellt wird, um von einer Geoposition zu einer anderen zu gelangen.

23. Navigationssystem (3) nach einem der Ansprüche 17 bis 21,
**dadurch gekennzeichnet,**
**dass** mit dem Navigationssystem (3) die voraussichtlichen Zeitintervalle berechenbar sind, um von der gegenwärtigen Geoposition zu anderen in dem Kartenausschnitt dargestellten Geopositionen zu gelangen, und dass die Anzeigedaten von der Recheneinheit so berechenbar sind, dass die Zeitintervalle mehreren Zeitzonen zugeordnet sind, die voneinander unterscheidbar in dem Kartenausschnitt dargestellt werden.

## Claims

1. Method for controlling the display of a geographic map in a vehicle, in which method a display device (1) is actuated in such a way that a portion of a geographic map is displayed on a spatially non-linear scale,
**characterized**
**in that** salient geographic positions which are not located in the displayed portion of the map are selected and are represented at the edge of the portion of the map, and
**in that** the size, the transparency and/or the colour of the representation of the geographic positions represented at the edge of the portion of the map depends on the distance from the current geographic Position of the user.

2. Method according to Claim 1,
**characterized**
**in that** the portion of the map is divided into at least two regions, and the two regions are displayed on different linear scales.

3. Method according two Claim 2,
**characterized**
**in that** the displayed portion of the map has continuos merging at the boundary between the two regions.

4. Method according to one of the preceding claims,
**characterized**
**in that** a preferred geographic position (5) is selected, and in that a smaller map scale is displayed in the vicinity of this preferred geographic position than in regions remote from the preferred geographic position (5).

5. Method according to one of the preceding claims,
**characterized**
**in that** the selection of the portion of the map is made by means of a navigation system (3).

6. Method according to Claim 5,
**characterized**
**in that** the preferred geographic Position (5) is the current geographic position of the user which is determined by the navigation system (3).

7. Method according to Claim 5,
**characterized**
**in that** the preferred geographic Position (5) is a geographic Position which is selected by means of the navigation system (3).

8. Method according to one of the preceding claims,
**characterized**
**in that** spatial scales are displayed in which there is a representation of how far geographic positions are distanced spatially from one another.

9. Method according to one of the preceding claims,
**characterized**
**in that** the anticipated period of time required to pass from one geographic Position two another is calculated, and in that the portion of the map or at least a part of the portion of the map is displayed on a time scale on which the period of time required to pass from one geographic position to another is represented.

10. Method according to Claim 9,
**characterized**
**in that** a Kombination of spatial scales and time scales is displayed.

11. Method according to Claim 9 or 10,
**characterized**
**in that** a part which is distanced from the current geographic position of the driver is displayed on a time scale.

12. Method according to one of the preceding claims,
**characterized**
**in that** the boundary line between two areas with representations on various scales is circular.

13. Method according to Claim 1,
**characterized**
**in that** the scale of the portion of the map changes contiguously.

14. Method according to once of the preceding claims,
**characterized**
**in that** the portion of the map or at least a part of the portion of the map is displayed on a logarithmic scale.

15. Method according to one of the preceding claims,
**characterized**
**in that** the anticipated time intervals required to pass from the geographic position of the user to other geographic positions represented in the portion of the map are calculated, the time intervals are assigned to multiple time zones, and the time zones are represented in the portion of the map in such a way that they can be differentiated from one another.

16. Method according to Claim 15,
**characterized**
**in that** the time zones are colour-coded.

17. Navigation system (3) comprising a display device for displaying a geographic map with a control unit (2) and a display device (1) which is connected to the control unit (2) and has the purpose of displaying a portion of the map, wherein the control unit (2) comprises a competing unit with which date which is assigned two the geographic map can be converted into display data while taking into account a scale, wherein the scale is spatially non-linear,
**characterized**
**in that** the navigation system (3) can be used to determine salient geographic positions outside the portion of the map which is to be represented, and in that the display data can be calculated by the computing unit in such a way that these specific geographic positions are represented at the edge of the portion of the map, wherein the size, the transparency and/or the colour of the representation of the geographic positions represented at the edge of the portion of the map depends on the distance from the current geographic position of the user.

18. Navigation system (3) according to Claim 17,
**characterized**
**in that** the competing unit can be used to divide the portion of the map intro at least two parts and to calculate display data with different linear scales for the two parts.

19. Navigation system (3) according to Claim 17 or 18,
**characterized**
**in that** the display data can be calculated by the competing unit in such a way that the displayed portion of the map has continuous merging at the boundary between the two parts.

20. Navigation system (3) according to claim 17,
**characterized**
**in that** the scale of the portion of the map changes continuously.

21. Navigation system (3) according to one of Claims 17 to 20,
**characterized**
**in that** the portion of the map or at least a part of the portion of the map is displayed on a logarithmic scale.

22. Navigation system (3) according to one of Claims 17 to 21,
**characterized**
**in that** the navigation system (3) can be used to calculate the anticipated period of time required to pass from one geographic position to another, and in that the display data can be calculated by the computing unit in such a way that the displayed portion of the map or at least a part of the portion of the map is displayed on a time scale on which the period of time required to pass from one geographic position to another is represented.

23. Navigation system (3) according to one of Claims 17 to 21,
**characterized in that** the navigation system (3) can be used to calculate the anticipated time intervals required to pass from the present geographic position to other geographic positions represented in the portion of the map, and **in that** the display data can be calculated by the computing unit in such a way that the time intervals are assigned to a plurality of time zones which are represented in the portion of the map in such a way that they can be differentiated from one another.

## Revendications

1. Procédé de commande de l'affichage d'une carte géographique dans un véhiculé, selon lequel un dispositif d'affichage (1) est commandé de telle sorte qu'une portion d'une carte géographique est affichée dans une échelle spatiale non linéaire, **caractérisé en ce que** des positions géographiques marquantes qui ne se trouvent pas dans la portion de carte affichée sont sélectionnées et sont représentées au bord de la portion de carte, et **en ce que** la taille, la transparence et/ou la couleur de la représentation des positrons géographiques représentées au bord de la portion de carte dépendent de l'éloignement de la position géographique actuelle de l'utilisateur.

2. Procédé selon la revendication 1, **caractérisé en ce que** la portion de carte est divisée en au moins deux zones et les deux zones sont affichées dans des échelles linéaires différenties.

3. Procécé selon la revendication 2, **caractérisé en ce que** la portion de carte affichée se fond continuellement au niveau de la limite entre les deux zones.

4. Procédé selon l'une des revendications précédentes, **caractérisé en ce qu'**une position géographique préférentielle (5) est sélectionnée et que l'échelle de carte affichée à proximité de cette position géographique préférentielle est plus petite que dans les zones éloignées de la position géographique préférentielle (5).

5. Procécé selon l' une des revendications précédentes, **caractérisé en ce que** la sélection de la portion de carte s'effectue par le biais d'un système de navigation (3).

6. Procédé selon la revendication 5, **caractérisé en ce que** la position géographique référentielle (5) est la position géographique actuelle de l'utilisateur déterminée par le système de navigation (3).

7. Procécé selon la revendication 5, **caractérisé en ce que** la positron géographique préférentielle (5) est une position géographique sélectionnée par le biais du système de navigation (3).

8. Procécé selon l'une des revendication précédentes, **caractérisé en ce que** des échelles spatiales sont affichées, lesquelles servent à représenter l'éloignement des positions géographiques entre elles.

9. Procécé selon l'une des revendication précédentes, **caractérisé en ce que** la durée prévue pour aller d'une position géographique à l'autre est calculée et que la portion de carte ou au moins une zone de la portion de carte est affichée dans une échelle temporelle qui sert à représenter la durée requise pour aller d'une position géographique à l'autre.

10. Procécé selon la revendication 9, **caractérisé en ce qu'**une combinaison d'échelles spatiales et temporelles est affichée.

11. Procédé selon la revendication 9 ou 10, **caractérisé en ce que** la zone la plus éloignée de la position géographique actuelle du conducteur est représentée dans une échelle temporelle.

12. Procédé selon l'une des revendications précédentes, **caractérisé en ce qu'**une ligne de délimitation entre deux zones représentées dans des échelles différentes est circulaire.

13. . Procécé selon la revendication 1, **caractérisé en ce que** l'échelle de la portion de carte varie constamment.

14. Procédé selon l'une des revendications précédentes, **caractérisé en ce que** la portion de carte ou au moins une zone de la portion de carte est affichée dans une échelle logarithmique.

15. Procécé selon l'une quelconque des revendications précédentes, **caractérisé en ce que** l'on calcule les durées prévues pour aller de la position géographique de l'utilisateur à d'autres positions géographiques représentées dans la portion de carte, les durées sont associées à plusieurs zones de temps et les zones de temps sont représentées de manière à pouvoir être distinguées les unes des autres dans la portion de carte.

16. Procécé selon la revendication 15, **caractérisé en ce que** les zonés de temps sont codées en couleur.

17. Système de navigation (3) comprenant un dispositif d'affichage pour afficher une carte géographique, comprenant un appareil de commande (2) et un dispositif d'affichage (1) relié à l'appareil de commande (2) pour afficher une portion de carte l'appareil de commande (2) contenant une unité de calcul avec laquelle les données associées à la carte, géographique peuvent être converties en données d'affichage en tentant compte d'une échelle, l'échelle étant spatialement non linéaire, **caractérisé en ce que** le système de navigation (3) permet de déterminer les positions géographiques marquantes qui se trouvent en-dehors de la portion de carte représentée et que les données d'affichage peuvent être calculées par l'unité de calcul de telle sorte que ces postions géographiques déterminées sont représentées au bord de la portion de carte, la taille, la transparence et/ou la couleur de la représentation des positions géographique représentée au bord de la portion de carte dépendant de l'éloignement de la positron géographique actuelle de l'utilisateur.

18. Système de navigation (3) selon la revendication 17, **caractérisé en ce que** l'unité de calcul permet de diviser la porion de carte en au moins deux zones et des données d'affichage pour les deux zones peuvent être calculées dans des échelles linéaires différences.

19. Système de navigation (3) selon la revendication 17 ou 18, **caractérisé en ce que** les données d'affichage peuvent être calculées par l'unité de calcul de telle sorte que la portion de carte affichée se fond continuellement au niveau de la limite entre les deux zones.

20. Système de navigation (3) selon la revendication 17, **caractérisé en ce que** l'échelle de la portion de carte varie constamment.

21. Système de navigation (3) selon l'une des revendication 17 à 20, **caractérisé en ce que** la portion de carte ou au moins une zone de la portion de carte est affichée dans une échelle logarithmique.

22. Système de navigation (3) selon l'une des revendications 17 à 21, **caractérisé en ce que** le système de navigation (3) permet de calculer la durée prévue pour aller d'une position géographique à l'autre et que les données d'affichage peuvent être calculées par l'unité de calcul de telle sorte que la portion de carte affichée ou au moins une zone de la portion de carte est affichée dans une échelle temporelle qui sert à représenter la durée requise pour aller d'une position géographique à l'autre.

23. Système de navigation (3) selon l'une des revendications 17 à 21, **caractérisé en ce que** le système de navigation (3) permet de calculer les durées prévues pour aller de la position géographique actuelle à d'autres positions géographiques représentées dans la portion de carte, et **en ce que** les données d'affichage peuvent être calculées par l'unité de calcul de telle sortie que les durées soient associées à plusieurs zones de temps qui sont représentées de manière a pourvoir être distinguées les unes des autres dans la portion de carte.
